# EUROPÄISCHE PATENTANMELDUNG

(11) **EP 1 970 146 A1**
(43) Veröffentlichungstag der Anmeldung: **17.09.2008**
(21) Anmeldenummer: 08102161.0
(22) Anmeldetag: 29.02.2008
(51) Int. Cl.: B22D 17/22, B22C 9/06, B29C 33/04, B29C 45/73

(54) **Verfahren und Vorrichtung zum Temperieren von Giessformen**

(30) Priorität: 15.03.2007 DE 102007013202
(71) Anmelder: Bühler Druckguss AG, 9240 Uzwil (CH)
(72) Erfinder: Hazeleger, Wouter, 9100 Herisau (CH)
(74) Vertreter: Frommhold, Joachim

(57) **Zusammenfassung**

Die Erfindung betrifft ein Verfahren zum Temperieren von Giessformen, insbesondere von Giessformen an Druckgiessmaschinen, das eine einfache Überwachung und Regelung der Temperierung ermöglicht. Hierzu wird in Teilkreisen je Formhälfte eine Erfassung der Temperatur- und Durchflussdaten vorgenommen.

## Beschreibung

Die Erfindung betrifft ein Verfahren zum Temperieren von Giessformen, insbesondere von Giessformen an Druckgiessmaschinen. Sie betrifft weiterhin eine Vorrichtung zum Temperieren von Giessformen.

Formen an Druckgiessmaschinen werden üblicherweise mittels Wasserkühlung und/oder Ölheizung temperiert. Von und zu Heiz- bzw. Kühlaggregaten verläuft eine Vielzahl von Schläuchen oder Rohrleitungen um das Heiz- oder Kühlmedium in Kanälen der Formrahmen, Einsätze und Kavitäten zirkulieren zu lassen. Ausgehend von Hauptkreisen der Temperiergeräte wird eine Vielzahl von Einzelkreisen verlegt.

Durchfluss und Temperatur der Medien werden dabei oft nur unzureichend gemessen und überwacht, Druck und Vorlauftemperaturen sind zum Teil nicht konstant, möglich sind zudem Ablagerungen und Leckagen sowie daraus resultierende Verunreinigungen der Giessanlagen, insbesondere durch Temperieröl. Es kann zu einer Verwechslung der Schläuche bei Montage und Demontage kommen.

Der Erfindung liegt nun die Aufgabe zugrunde, ein Verfahren zum Temperieren von Giessformen, insbesondere von Giessformen an Druckgiessmaschinen zu schaffen, das eine einfache Überwachung und Regelung der Temperierung ermöglicht. Die Aufgabe ist mit den Merkmalen des Patentanspruchs 1 gelöst. Durch die Aufteilung von Hauptkreisen in Teilkreise wird die Datenerfassung in Verteilerblöcke integrierbar und Temperatur- und Durchflussmessungen je Teilkreis einfacher überwachbar.

Durch Verteilerblöcke können 5-7 Teilkreise an ein Temperiergerät angeschlossen werden und es sind bis ca. 30 Teilkreise möglich, wodurch nur wenige Temperiergeräte erforderlich sind. Der Wartungsaufwand und die Anzahl der Schläuche sinken deutlich.

Eine weitere Aufgabe der Erfindung besteht darin, eine Vorrichtung zum Temperieren von Giessformen zu schaffen, die eine einfache Temperierung ermöglicht. Diese Aufgabe ist mit den Merkmalen des Patentanspruchs gelöst. Kennzeichnend ist die Anordnung von Verteilerblöcken für Temperiermedien, in die Sensoren zur Durchfluss- und Temperaturmessung sowie Stellventile integriert sind.

Temperatur und Durchfluss werden je Teilkreis überwacht und Produktionsunterbrechungen durch Unregelmässigkeiten können frühzeitig verhindert werden. Konstante Temperaturen wiederum ergeben eine Lebensdauer der Formen und weniger Gratbildung an den Gussteilen.
Durch die integrierten Kupplungsplatten der Teilkreise sinkt das Verwechslungsrisiko von Anschlüssen. Da die Formkavitäten direkt temperiert werden, können Aufheizzeiten verringert werden.

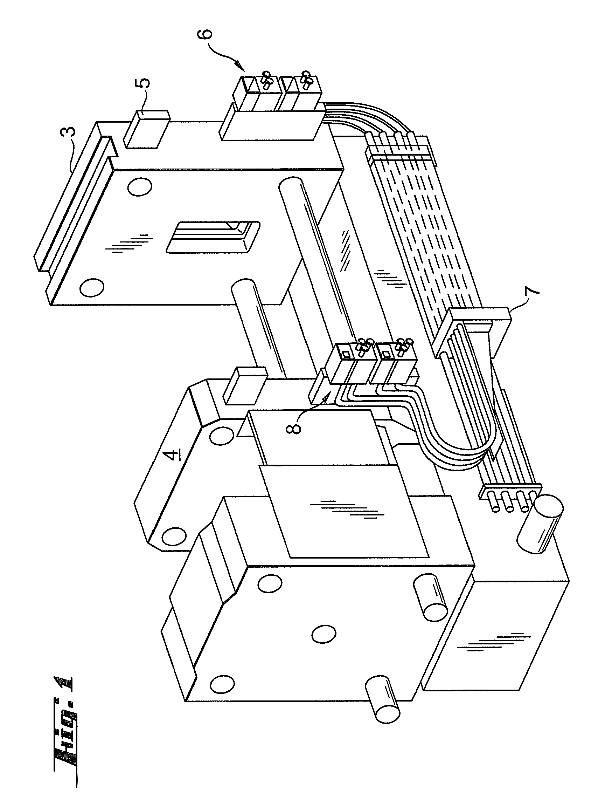

Die Erfindung wird nachfolgend in einem Ausführungsbeispiel anhand einer Zeichnung näher beschrieben. In der Zeichnung zeigen die
- Fig. 1:: die Formrahmen einer Druckgiessmaschine

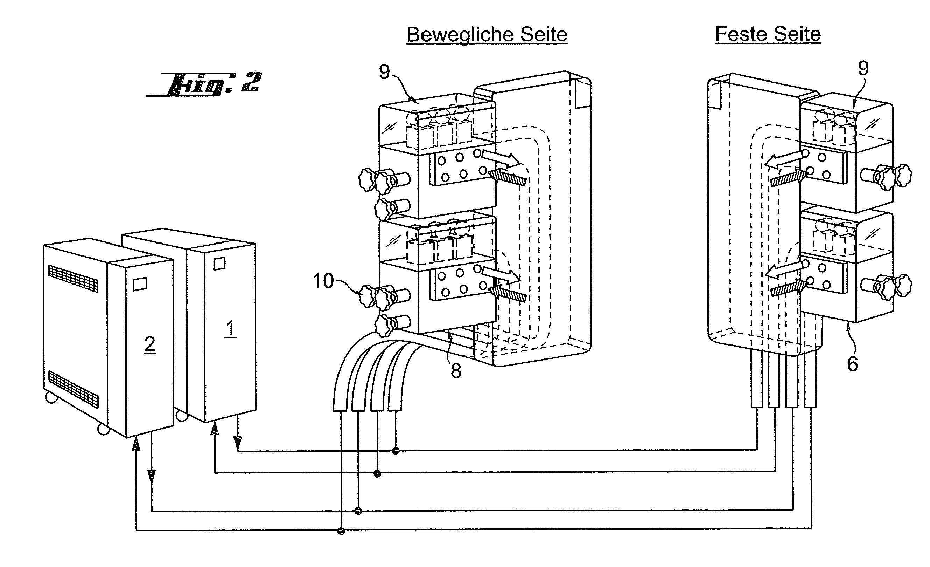

- Fig. 2:: Verteilerblöcke

Temperiergeräte 1, 2 (Druckwassergeräte, 20°C bis 160°C) versorgen die Form einer Druckgiessmaschinen mit den Temperiermedien, insbesondere den festen und den beweglichen Formrahmen 3, 4 sowie die nicht explizit dargestellte Form bzw. Formhälften je Formrahmen. Am festen Formrahmen 3 sind eine Anschlussbox 5 für die Maschinensteuerung und bis zu vier Verteilerblöcke 6 (Hauptkreise) für jeweils zwei bis vier Teilkreise vorgesehen. Solche Verteilerblöcke 8 sind auch am beweglichen Formrahmen 4 vorgesehen. Die Verteilerblöcke 6, 8 sind wiederum mit einem Verteilersystem 7 zu den Temperiergeräten verbunden. Pro Formseite sind bis zu vier Hauptkreise vorgesehen. Jeder Verteilerblock 6, 8 enthält zwei bis vier Teilkreise, die mit Sensoren 9 für Temperatur und Durchflussmenge sowie mit Durchflussreglern (einschliesslich Handventilen 10) versehen sind.

Je Temperiergerät 1, 2 können bis zu sieben Teilkreise angeschlossen werden. Temperatur und Durchflussmenge werden pro Teilkreis überwacht.

### Bezugszeichen

- 1: Temperiergerät
- 2: Temperiergerät
- 3: fester Formrahmen
- 4: beweglicher Formrahmen
- 5: Anschlussbox
- 6: Verteilerblock
- 7: Verteilersystem
- 8: Verteilerblock
- 9: Sensor
- 10: Handventil

## Patentansprüche

1. Verfahren zum Temperieren von Giessformen, insbesondere von Giessformen an Druckgiessmaschinen, wobei die Giessformen mittels diese durchströmende Medien temperiert werden, deren Temperatur und Durchflussmengen erfasst werden, **dadurch gekennzeichnet, dass** in Teilkreisen je Formhälfte eine Erfassung der Temperatur- und Durchflussdaten vorgenommen wird.

2. Verfahren nach Anspruch 1, **dadurch gekennzeichnet, dass** die Datenerfassung in Verteilerblöcken (6, 8) integriert wird.

3. Vorrichtung zum Temperieren von Giessformen, insbesondere von Giessformen an Druckgiessmaschinen, wobei die Giessformen mittels diese durchströmende Medien temperiert werden, deren Temperatur und Durchflussmengen erfasst werden, **dadurch gekennzeichnet, dass** Verteilerblöcke (6, 8) für Teilkreise vorgesehen sind, in denen eine Datenerfassung für Temperatur und Durchflussmenge der Medien integriert ist.

4. Vorrichtung nach Anspruch 3, **dadurch gekennzeichnet, dass** mindestens ein Verteilerblock (6, 8) je Formhälfte bzw. Formrahmen (3, 4) vorgesehen ist.

5. Vorrichtung nach Anspruch 3 oder 4, **dadurch gekennzeichnet, dass** je Teilkreis mindestens ein Sensor (9) und ein Steuerventil vorgesehen sind
